# EUROPEAN PATENT SPECIFICATION

(11) **EP 3 589 575 B1**
(45) Date of publication and mention of the grant of the patent: **05.04.2023**
(21) Application number: 18708770.5
(22) Date of filing: 23.02.2018
(51) Int. Cl.: B66C 13/46

(54) **A VEHICLE PROVIDED WITH AN ARRANGEMENT FOR DETERMINING A THREE DIMENSIONAL REPRESENTATION OF A MOVABLE MEMBER**
FAHRZEUG MIT EINER ANORDNUNG ZUR BESTIMMUNG EINER DREIDIMENSIONALEN DARSTELLUNG EINES BEWEGLICHEN ELEMENTS
VÉHICULE ÉQUIPÉ D'UN AGENCEMENT POUR DÉTERMINER UNE REPRÉSENTATION TRIDIMENSIONNELLE D'UN ÉLÉMENT MOBILE

(30) Priority: 03.03.2017 SE 1750238
(43) Date of publication of application: 08.01.2020
(73) Proprietor: Hiab AB, 164 22 Kista (SE)
(72) Inventor: LYNGBÄCK, Hans, 824 50 Hudiksvall (SE); GUSTAFSSON, Per, 824 42 Hudiksvall (SE); RÖSTH, Marcus, 824 43 Hudiksvall (SE)
(74) Representative: Bjerkén Hynell KB
(86) International application number: PCT/SE2018/050175
(87) International publication number: WO 2018/160119

(56) References cited:
- DE-A1-102014 218 749
- JP-A- 2016 102 312
- US-A1- 2014 188 333

## Description

### Technical field

The present disclosure relates to a vehicle provided with an arrangement for determining a three dimensional representation of a movable member, e.g. a crane, movably arranged at the vehicle.

### Background

Working vehicles are often provided with various movable members, e.g. cranes, which are attached to the vehicle via a joint. These movable members comprise movable parts, e.g. booms that may be extended, that are joined together by joints such that the movable parts may be folded together at the vehicle and extended to reach a load. Various tools, e.g. buckets or forks, may be attached to the tip, of the movable member, e.g. the crane tip, often via a rotator. When disclosing the presently applied technique we refer to a crane as the movable member.

The operator has normally visual control of the crane when performing various tasks. A crane provided with extendible booms have load limitations related to how far the boom has been extended. The operator therefore needs to be aware of the load limitations when lifting loads.

Currently the feedback of crane position of the booms and slewing house is using e.g. angle sensors, length sensors for the extensions (wire, MTS, ultrasound, etc.), pressure measurements of the hydraulic system used to move the crane and to extend the booms.

US-2014/188333 discloses a method to assist in controlling a machine according to the preamble of claim 1, which is equipped with a work implement for performing work at a worksite.

The object of the present invention is to achieve an improvement in relation to determining the position of a movable member, e.g. a crane, at a vehicle, in order to improve the controllability and safety of the vehicle provided with the movable member.

### Summary

The above-mentioned object is achieved by the present invention according to the independent claim.

Preferred embodiments are set forth in the dependent claims.

According to an aspect of the present invention the vehicle is provided with an arrangement configured to determine a three dimensional representation of the positions of movable parts of a movable member, e.g. a crane, such as booms, boom extensions and tools mounted at the crane tip, by arranging identification (ID) tags, e.g. visual ID tags, on the movable parts. By using an object detecting device, e.g. a camera system, the distances and directions to the ID tags at the movable members are measured.

In one alternative, the determined 3D representation of the movable member, e.g. the crane, together with the information of which hydraulic functions that are activated by the crane operator are fed to the crane electronic control unit (ECU) which may implement a state based model of the crane and position of each crane part is then calculated and updated in the model.

The 3D representation is able to present a schematic illustration or image in real time of the crane, and in particular highlight movements of the crane.

Advantageously, the arrangement according to the present invention combines the vision system, embodied by the object detecting device, that can be used for multiple purposes; e.g. operator feedback, autonomous loader crane, object identification, etc., with feedback to the crane control system.

Some presently used sensors may be replaced by instead applying the arrangement defined herein, e.g. to perform length measurements.

Thus, if a vehicle provided with a crane is equipped with an arrangement disclosed herein length measurements may be performed by using e.g. the camera system and thereby replace some of the presently used sensors.

### Brief description of the drawings

Figure 1 is a schematic illustration of a vehicle according to the present invention.
Figure 2 is a schematic block diagram illustrating various aspects of the present invention.
Figure 3 shows a movable member embodied as a crane according to the present invention.
Figure 4 shows an enlarged view of A indicated in figure 3.
Figure 5 shows an enlarged view of B indicated in figure 3.

### Detailed description

The vehicle will now be described in detail with references to the appended figures. Throughout the figures the same, or similar, items have the same reference signs. Moreover, the items and the figures are not necessarily to scale, emphasis instead being placed upon illustrating the principles of the invention.

The vehicle is any vehicle provided with a movable member, e.g. a crane, and includes any working vehicle, forestry vehicle, transport vehicle, and loading vehicle.

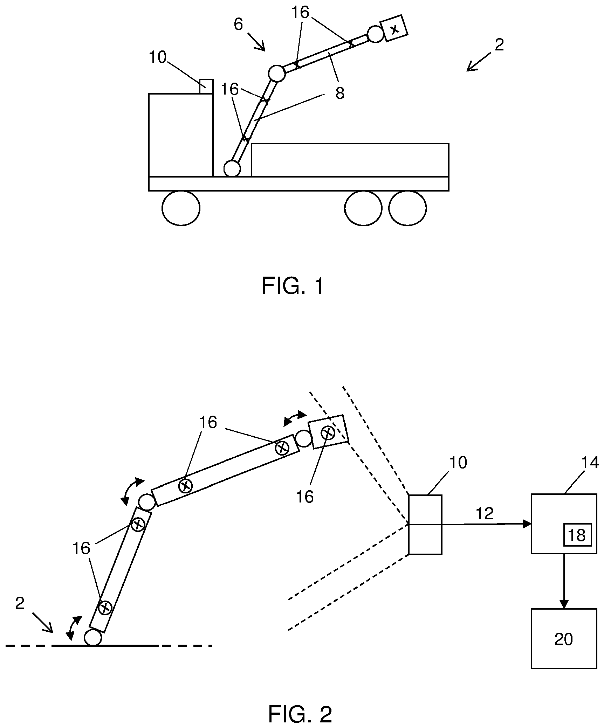

With references to the schematic figures 1 and 2 it is illustrated that the vehicle 2 comprises a movable member 6, e.g. a foldable crane provided with a tool attached to a crane tip, mounted on the vehicle and movably attached to the vehicle. The movable member 6 comprises at least one movable part 8, e.g. at least one boom and a tool, e.g. a bucket, and is movable within a movement range.

Thus, the vehicle and the movable member will not be disclosed in greater detail as these are conventional, and being conventionally used, e.g. with regard to the joint between the crane and the vehicle, the joints between the movable parts of the movable member, and the joint between a crane tip and a tool.

The vehicle further comprises an arrangement to determine a real-time three-dimensional (3D) representation of the movable member 6.

The arrangement comprises at least one object detecting device 10 provided at the vehicle and configured to wirelessly capture information of objects of the movable member 6 within a predefined field of view.

In one embodiment the object detecting device 10 is a camera system comprising at least two cameras, and preferably two cameras, that have essentially overlapping field of views. This embodiment will be further discussed below. The limitations for the field of views for the object detecting device are indicated as dashed lines in figure 2.

The captured information comprises at least a distance and a direction to an object defining a coordinate in a three dimensional coordinate system, the object detecting device 10 is configured to generate an object data signal 12 comprising data representing captured information.

The arrangement further comprises a processing unit 14 configured to receive said object data signal 12. The processing unit 14 may be embodied as a dedicated electronic control unit (ECU), or implemented as a part of another ECU.

Furthermore, each movable part 8 is provided with at least one identification (ID) tag 16 being mounted such that at least one ID tag of each movable part is detectable by the object detecting device 10, e.g. the camera system, within the field of view.

Thus, the object detecting device 10 is preferably mounted at the movable member as device 10 then follows the movement of the movable member. As an alternative, the object detecting device is mounted at an elevated position of the vehicle, e.g. at the cabin roof as illustrated in figure 1, in order to cover essentially the entire movement range of the movable member.

The processing unit 14 comprises a storage unit 18 including type information of the movable member 6 including at least the number of movable parts and a set of various typical fictitious positions of the movable member. The type information may comprise a three dimensional CAD model of the movable member. In other words, the type information ensures that the processing unit "knows" which type of movable member that is presently used and various related information to that, e.g. with regard to load limitations for different boom extensions, working movement ranges. Furthermore, the type information also includes the number of and the positions of the ID tags on the respective member part, and also the identities of these ID tags.

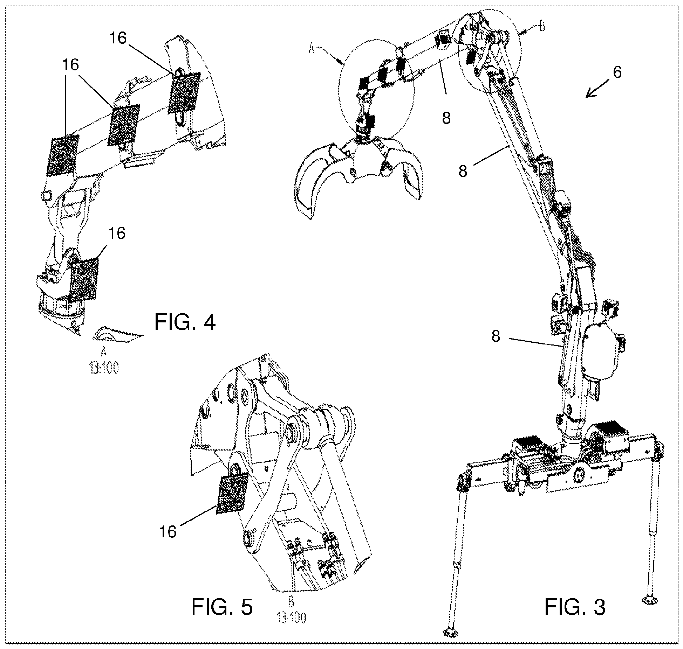

The number of ID tags on the respective member part is normally in the range of 1-5, but may naturally be higher for larger vehicles. In figure 2 is illustrated a setup where two ID tags are arranged at each movable member, and being arranged close to the respective ends of each member part. In figures 3 and 4 another example is illustrated where three ID tags are arrange at an extendible member part.

The processing unit 14 is configured to process the object data signal 12 by applying a set of tag identification rules and by using the type information. When processing the captured information the ID tags are searched for by applying e.g. an image recognition algorithm being designed to search for and identify the ID tags.

The processing steps then comprises:
- to identify ID tags being simultaneously captured; in this step the direction and distance, i.e. the coordinates in three dimensions, are available from the object data signal and the identity of the ID tag in that specific position is determined;
- to group the identified simultaneously captured tags in a tag group, and
- to form, by using the tags in a tag group, a 3D representation of the movable member.

Thereby is obtained a real-time representation of the position of the movable member in a three-dimensional coordinate system.

According to one embodiment the above processing steps is repeated by the processing unit 14. Thus, the processing unit is then further configured to determine time consecutive tag groups that represent a movable member movement being a real-time dynamic 3D representation of the movable member 6. A typical time interval between consecutive measurements is in the range of 10-100 ms depending on the specific requirement for the presently used movable member, a typical time interval is 50 ms.

In one embodiment the ID tag 16 is a visual ID tag provided with a visually distinguishable pattern. One advantageous variation is to use a QR code or a bar code, as they may include various useful information.

Generally, the ID tag may have an essentially flat extension, and may have a rectangular or circular shape. It may also have a specific colour and provided with an indication, e.g. a cross, designating the centre of the tag. The size of the tag may be in the range of 5-15 cm.

All, or essentially all, ID tags should be able to be individually identified in order to facilitate creating the 3D representation of the movable member.

According to one embodiment all ID tags 16 of a movable part 8 have the same unique identity, separate from the identities of ID tags of other movable parts. This is provided by including in the type information the identities of ID tags and related movable parts. In other words, all ID tags of one movable part have the same unique identity.

According to another embodiment each ID tag has a unique identity, and the type information includes the identities of ID tags and related movable parts. Thus, in this embodiments all ID tags have unique identities.

As mentioned above the object detecting device 10 is preferably a camera system provided with two cameras arranged at a distance from each other such that the cameras capture overlapping field of views. The field of views should preferably cover essentially the entire movable range of the movable member.

In other embodiments the object detecting device 10 is a laser scanning device or a structured-light 3D scanner.

In various situations it is beneficial to illustrate the position of the movable member to an operator at a display unit. For example, the illustration may include overlaid information of specific limitations, e.g. with regard to maximal load for a specific position of e.g. the crane, e.g. for various boom extensions. Thereby the operator is provided with useful information of the working procedure and may control the crane in a more safe way.

Thus, in a further embodiment the arrangement comprises a display unit 20 and the processing unit 14 is configured to present the determined 3D representation on the display unit. The presented 3D representation is a virtual representation of the movable member 6, e.g. the crane, made up by applying the type information that includes a schematic illustration of the movable member.

The display unit may be a display arranged e.g. at a control unit or in the vehicle. As an alternative the display unit 20 is a pair of goggles, for example of the type sold under the trademark Hololens. The pair of goggles is structured to present the 3D representation such that the 3D representation is overlaid on the transparent glasses through which a user observes the movable member. As, mentioned above, various additional information may also be presented as overlaid information and preferably presented such that the additional information is presented close to an illustrated part of the movable member.

In still another embodiment the display unit 20 is a pair of virtual reality goggles. These types of goggles comprise two displays to be arranged in front of the operator's eyes.

In a conventional crane hydraulic systems are normally used to move the various parts of the crane. Various pressure measurements of the hydraulic liquid are made and are often applied as indicators to establish the state of the crane. As this information is readily available it would be advantageous to combine the determined 3D representation with the presently available data, e.g. from the hydraulic system of the vehicle. Thus, in a further embodiment the processing unit is configured to receive information of which hydraulic functions being activated by an operator when controlling the movable member. The hydraulic function information may then also be applied when determining the 3D representation.

If visual ID tags are used dirt on the tags may compromise detection. The arrangement may be designed to detect problems with dirty tags. This may be accomplish by generating an indication signal if not all tags are detected, in addition information may be included regarding which of the tags not being detected.

Figure 3 shows a movable member according to the present invention, in this illustrated embodiment the movable member is a crane provided with a tool being a forestry gripping tool. Two specific details A and B have been indicated and are shown in greater detail in figures 4 and 5, respectively. In the illustrated embodiment the ID tag is a OR code. Figure 4 shows a detailed view of boom extensions and the rotator. Figure 5 shows a detailed view of endpoint of the first boom, and the linkage to the second boom.

In the following some examples of object detecting devices are provided which may be applied in the vehicle as discussed above.

A camera system comprises at least two cameras, preferably two cameras, sometimes called stereo camera. This is an advantageous embodiment of the object detecting device as stereo camera systems are more and more frequently used in various vehicles.

A stereo camera is a type of camera with two lenses with a separate image sensor for each lens. This allows the camera to simulate human binocular vision, and therefore gives it the ability to capture three-dimensional images, a process known as stereo photography. Stereo cameras may be used for making 3D pictures, or for range imaging. Unlike most other approaches to depth sensing, such as structured light or time-of-flight measurements, stereo vision is a purely passive technology which also works in bright daylight.

In another embodiment the object detecting device uses the Lidar-technology. Lidar is sometimes considered an acronym of Light Detection And Ranging (sometimes Light Imaging, Detection, And Ranging), and is a surveying method that measures distance to a target by illuminating that target with a laser light. Lidar is popularly used to make high-resolution maps, with applications in geodesy, forestry, laser guidance, airborne laser swath mapping (ALSM), and laser altimetry. Lidar sometimes is called laser scanning and 3D scanning, with terrestrial, airborne, and mobile applications.

In still another embodiment a 3D scanning device is used. A 3D scanner is a device that analyses a real-world object or environment to collect data on its shape and possibly its appearance (e.g. colour). The collected data can then be used to construct digital three-dimensional models.

Many different technologies can be used to build these 3D-scanning devices; each technology comes with its own limitations, advantages and costs. Many limitations in the kind of objects that can be digitised are still present, for example, optical technologies encounter many difficulties with shiny, mirroring or transparent objects. For example, industrial computed tomography scanning can be used to construct digital 3D models, applying non-destructive testing.

The purpose of a 3D scanner is usually to create a point cloud of geometric samples on the surface of the subject. These points can then be used to extrapolate the shape of the subject (a process called reconstruction). If colour information is collected at each point, then the colours on the surface of the subject can also be determined.

3D scanners share several traits with cameras. Like most cameras, they have a cone-like field of view, and like cameras, they can only collect information about surfaces that are not obscured. While a camera collects colour information about surfaces within its field of view, a 3D scanner collects distance information about surfaces within its field of view. The "picture" produced by a 3D scanner describes the distance to a surface at each point in the picture. This allows the three dimensional position of each point in the picture to be identified.

In still another embodiment a so-called time-of-flight lidar scanner may be used to produce a 3D model. The lidar can aim its laser beam in a wide range: its head rotates horizontally, a mirror flips vertically. The laser beam is used to measure the distance to the first object on its path.

The time-of-flight 3D laser scanner is an active scanner that uses laser light to probe the subject. At the heart of this type of scanner is a time-of-flight laser range finder. The laser range finder finds the distance of a surface by timing the round-trip time of a pulse of light. A laser is used to emit a pulse of light and the amount of time before the reflected light is seen by a detector is measured. Since the speed of light c is known, the round-trip time determines the travel distance of the light, which is twice the distance between the scanner and the surface. The accuracy of a time-of-flight 3D laser scanner depends on how precisely we can measure the t; 3.3 picoseconds (approx.) is the time taken for light to travel 1 millimetre.

The laser range finder only detects the distance of one point in its direction of view. Thus, the scanner scans its entire field of view one point at a time by changing the range finder's direction of view to scan different points. The view direction of the laser range finder can be changed either by rotating the range finder itself, or by using a system of rotating mirrors. The latter method is commonly used because mirrors are much lighter and can thus be rotated much faster and with greater accuracy. Typical time-of-flight 3D laser scanners can measure the distance of 10,000-100,000 points every second.

In another embodiment the object detecting device uses a structured-light 3D scanner that projects a pattern of light on the subject and look at the deformation of the pattern on the subject. The pattern is projected onto the subject using either an LCD projector or other stable light source. A camera, offset slightly from the pattern projector, looks at the shape of the pattern and calculates the distance of every point in the field of view.

The advantage of structured-light 3D scanners is speed and precision. Instead of scanning one point at a time, structured light scanners scan multiple points or the entire field of view at once. Scanning an entire field of view in a fraction of a second reduces or eliminates the problem of distortion from motion. Some existing systems are capable of scanning moving objects in real-time.

The present invention is not limited to the above-described preferred embodiments. Various alternatives, modifications and equivalents may be used. Therefore, the above embodiments should not be taken as limiting the scope of the invention, which is defined by the appending claims.

## Claims

1. A vehicle (2) comprising a movable member (6) mounted on the vehicle and movably attached to the vehicle, the movable member (6) comprises at least one movable part (8) and is movable within a movement range, the vehicle further comprises an arrangement to determine a real-time three-dimensional (3D) representation of said movable member (6), the arrangement comprises:
- at least one object detecting device (10) provided at said vehicle and configured to wirelessly capture information of objects of the movable member (6) within a predefined field of view, the captured information comprises at least a distance and a direction to an object defining a coordinate in a three dimensional coordinate system, the object detecting device (10) is configured to generate an object data signal (12) comprising data representing captured information,
- a processing unit (14) configured to receive said object data signal (12),
**characterized in that** each movable part (8) is provided with at least one identification (ID) tag (16) being mounted such that at least one ID tag of each movable part is detectable by said object detecting device (10) within said field of view, the processing unit (14) comprises a storage unit (18) including type information of said movable member (6) including at least the number of movable parts, a three dimensional CAD model of the movable member, and a set of various typical fictitious positions of the movable member, and that the processing unit (14) is configured to process said object data signal (12) by applying a set of tag identification rules and by using said type information, the processing comprises:
- to identify ID tags being simultaneously captured, wherein the direction and distance, i.e. the coordinates in three dimensions, are available from the object data signal and the identity of the ID tag **in that** specific position is determined;
- to group said identified simultaneously captured tags in a tag group;
- to form, by using the tags in a tag group, a 3D representation of said movable member.

2. The vehicle according to claim 1, wherein said processing unit (14) is further configured to determine time consecutive tag groups that represent a movable member movement being a real-time dynamic 3D representation of said movable member (6).

3. The vehicle according to claim 1 or 2, wherein the ID tag (16) is a visual ID tag that has an essentially flat extension, and is provided with a QR code, a bar code, or any other visually distinguishable pattern.

4. The vehicle according to any of claims 1-3, wherein all ID tags (16) of a movable part (8) have the same unique identity, separate from the identities of ID tags of other movable parts, and wherein said type information includes the identities of ID tags and related movable parts.

5. The vehicle according to any of claims 1-3, wherein each ID tag has a unique identity, and wherein said type information includes the identities of ID tags and related movable parts.

6. The vehicle according to any of claims 1-5, wherein said object detecting device (10) is a camera system comprising two cameras that have essentially overlapping field of views.

7. The vehicle according to any of claims 1-5, wherein said object detecting device (10) is a laser scanning device.

8. The vehicle according to any of claims 1-5, wherein said object detecting device (10) is a structured-light 3D scanner.

9. The vehicle according to any of claims 1-8, wherein the arrangement further comprises a display unit (20) and the processing unit (14) is configured to present said 3D representation on said display unit, and wherein said presented 3D representation is a virtual representation of the movable member (6) made up by applying said type information that includes a schematic illustration of said movable member.

10. The vehicle according to claim 9, wherein said display unit (20) is a pair of goggles structured to present the 3D representation such that the 3D representation is overlaid on the goggles through which a user observes the movable member.

11. The vehicle according to claim 9, wherein said display unit (20) is a pair of virtual reality goggles.

12. The vehicle according to any of claims 1-11, wherein the movable member is a foldable crane, and the movable parts are one or many of a boom and a tool.

13. The vehicle according to claim 1, wherein said processing unit (14) is further configured to determine a three dimensional representation of the positions of the movable parts of the movable member from said 3D representation of the movable member.

14. The vehicle according to any of claims 1-13, wherein said movable parts of a movable member is one or many of booms, boom extensions, and tools arranged at a tip of the movable member.

## Patentansprüche

1. Fahrzeug (2), das ein bewegliches Element (6) umfasst, das an dem Fahrzeug montiert und beweglich an dem Fahrzeug angebracht ist, wobei das bewegliche Element (6) mindestens ein bewegliches Teil (8) umfasst und innerhalb eines Bewegungsbereichs beweglich ist, wobei das Fahrzeug ferner eine Anordnung umfasst, um eine dreidimensionale (3D) Darstellung des beweglichen Elements (6) in Echtzeit zu bestimmen, wobei die Anordnung umfasst:
- mindestens eine Objektdetektionsvorrichtung (10), die an dem Fahrzeug vorgesehen und so konfiguriert ist, dass sie drahtlos Informationen von Objekten des beweglichen Elements (6) innerhalb eines vordefinierten Sichtfeldes erfasst, wobei die erfassten Informationen mindestens einen Abstand und eine Richtung zu einem Objekt umfassen, das eine Koordinate in einem dreidimensionalen Koordinatensystem definiert, wobei die Objektdetektionsvorrichtung (10) so konfiguriert ist, dass sie ein Objektdatensignal (12) erzeugt, das Daten umfasst, die erfasste Informationen darstellen,
- eine Verarbeitungseinheit (14), die zum Empfang des Objektdatensignals (12) konfiguriert ist,
**dadurch gekennzeichnet, dass** jedes bewegliche Teil (8) mit mindestens einem Identifikations-(ID)-Kennzeichen (16) versehen ist, das so angebracht ist, dass mindestens ein ID-Kennzeichen jedes beweglichen Teils durch die Objektdetektionsvorrichtung (10) innerhalb des Sichtfelds detektiert werden kann, dass die Verarbeitungseinheit (14) eine Speichereinheit (18) umfasst, die Typinformationen des beweglichen Elements (6) enthält, die mindestens die Anzahl der beweglichen Teile, ein dreidimensionales CAD-Modell des beweglichen Elements und einen Satz verschiedener typischer fiktiver Positionen des beweglichen Elements umfasst, und dass die Verarbeitungseinheit (14) so konfiguriert ist, dass sie das Objektdatensignal (12) durch Anwenden eines Satzes von Kennzeichen-Identifikationsregeln und durch Verwenden der Typinformationen verarbeitet, wobei die Verarbeitung umfasst:
- ein Identifizieren gleichzeitig erfasster ID-Kennzeichen, wobei die Richtung und die Entfernung, d.h. die Koordinaten in drei Dimensionen, aus dem Objektdatensignal verfügbar sind und die Identität des ID-Kennzeichens an dieser spezifischen Position bestimmt wird;
- Gruppieren identifizierter, gleichzeitig erfasster Kennzeichen in einer Kennzeichengruppe;
- Erstellen einer 3D-Darstellung des beweglichen Elements mit Hilfe der Kennzeichen in einer Kennzeichengruppe.

2. Fahrzeug nach Anspruch 1, wobei die Verarbeitungseinheit (14) ferner so konfiguriert ist, dass sie zeitlich aufeinanderfolgende Kennzeichengruppen bestimmt, die eine Bewegung des beweglichen Elements darstellen, die eine dynamische 3D-Darstellung des beweglichen Elements (6) in Echtzeit ist.

3. Fahrzeug nach einem der Ansprüche 1 oder 2, wobei das ID-Kennzeichen (16) ein visuelles ID-Kennzeichen ist, das eine im Wesentlichen flache Ausdehnung hat und mit einem QR-Code, einem Strichcode oder einem anderen visuell unterscheidbaren Muster versehen ist.

4. Fahrzeug nach einem der Ansprüche 1 bis 3, wobei alle ID-Kennzeichen (16) eines beweglichen Teils (8) dieselbe eindeutige Identität haben, die von den Identitäten der ID-Kennzeichen anderer beweglicher Teile getrennt ist, und wobei die Typinformationen die Identitäten der ID-Kennzeichen und der zugehörigen beweglichen Teile enthalten.

5. Fahrzeug nach einem der Ansprüche 1 bis 3, wobei jedes ID-Kennzeichen eine eindeutige Identität hat und wobei die Typinformation die Identitäten der ID-Kennzeichen und der zugehörigen beweglichen Teile enthält.

6. Fahrzeug nach einem der Ansprüche 1 bis 5, wobei die Objektdetektionsvorrichtung (10) ein Kamerasystem mit zwei Kameras ist, die sich im Wesentlichen überlappende Sichtfelder haben.

7. Fahrzeug nach einem der Ansprüche 1 bis 5, wobei die Objektdetektionsvorrichtung (10) eine Laserabtastvorrichtung ist.

8. Fahrzeug nach einem der Ansprüche 1 bis 5, wobei die Objektdetektionsvorrichtung (10) ein 3D-Scanner mit strukturiertem Licht ist.

9. Fahrzeug nach einem der Ansprüche 1 bis 8, wobei die Anordnung ferner eine Anzeigeeinheit (20) umfasst und die Verarbeitungseinheit (14) so konfiguriert ist, dass sie die 3D-Darstellung auf der Anzeigeeinheit darstellt, und wobei die dargestellte 3D-Darstellung eine virtuelle Darstellung des beweglichen Elements (6) ist, die durch Anwendung der Typinformationen erstellt wird, die eine schematische Darstellung des beweglichen Elements enthalten.

10. Fahrzeug nach Anspruch 9, wobei die Anzeigeeinheit (20) eine Brille ist, die so aufgebaut ist, dass sie die 3D-Darstellung so darstellt, dass die 3D-Darstellung die Brille überlagert, durch die ein Benutzer das bewegliche Element betrachtet.

11. Fahrzeug nach Anspruch 9, wobei die Anzeigeeinheit (20) eine Virtual-Reality-Brille ist.

12. Fahrzeug nach einem der Ansprüche 1 bis 11, wobei das bewegliche Element ein faltbarer Kran ist und die beweglichen Teile ein oder mehrere Ausleger und ein Werkzeug sind.

13. Fahrzeug nach Anspruch 1, wobei die Verarbeitungseinheit (14) ferner dazu ausgebildet ist, aus der 3D-Darstellung des beweglichen Elements eine dreidimensionale Darstellung der Positionen der beweglichen Teile des beweglichen Elements zu bestimmen.

14. Fahrzeug nach einem der Ansprüche 1 bis 13, wobei die beweglichen Teile eines beweglichen Elements ein oder mehrere Ausleger, Auslegerverlängerungen und Werkzeuge sind, die an einer Spitze des beweglichen Elements angeordnet sind.

## Revendications

1. Véhicule (2) comprenant un élément mobile (6) monté sur le véhicule et fixé de manière mobile au véhicule, l'élément mobile (6) comprend au moins une partie mobile (8) et est mobile dans une plage de déplacement, le véhicule comprend en outre un agencement pour déterminer une représentation tridimensionnelle en temps réel (3D) dudit élément mobile (6), l'agencement comprend :
- au moins un dispositif de détection d'objets (10) situé au niveau dudit véhicule et configuré pour capturer sans fil des informations d'objets de l'élément mobile (6) dans un champ de vision prédéfini, les informations capturées comprennent au moins une distance et une direction vers un objet définissant une coordonnée dans un système de coordonnées tridimensionnel, le dispositif de détection d'objets (10) étant configuré pour générer un signal de données d'objets (12) comprenant des données représentant des informations capturées,
- une unité de traitement (14) configurée pour recevoir ledit signal de données d'objets (12), **caractérisé en ce que** chaque partie mobile (8) est pourvue d'au moins une étiquette d'identification (ID) (16) montée de telle sorte qu'au moins une étiquette ID de chaque partie mobile est détectable par ledit dispositif de détection d'objets (10) dans ledit champ de vision, l'unité de traitement (14) comprend une unité de stockage (18) incluant des informations de type dudit élément mobile (6) incluant au moins le nombre de parties mobiles, un modèle de CAO tridimensionnel de l'élément mobile, et un ensemble de diverses positions fictives typiques de l'élément mobile, et **en ce que** l'unité de traitement (14) est configurée pour traiter ledit signal de données d'objets (12) en appliquant un ensemble de règles d'identification d'étiquette et en utilisant lesdites informations de type, le traitement comprend les étapes consistant à :
- identifier des étiquettes d'identification étant capturées simultanément, dans lequel la direction et la distance, c'est-à-dire les coordonnées en trois dimensions, sont disponibles à partir du signal de données d'objets et l'identité de l'étiquette ID dans cette position spécifique est déterminée ;
- regrouper lesdites étiquettes capturées simultanément identifiées dans un groupe d'étiquettes ;
- former, en utilisant les étiquettes dans un groupe d'étiquettes, une représentation 3D dudit élément mobile.

2. Véhicule selon la revendication 1, dans lequel ladite unité de traitement (14) est en outre configurée pour déterminer des groupes d'étiquettes consécutifs dans le temps qui représentent un déplacement d'élément mobile qui est une représentation 3D dynamique en temps réel dudit élément mobile (6).

3. Véhicule selon la revendication 1 ou 2, dans lequel l'étiquette ID (16) est une étiquette ID visuelle qui présente une extension essentiellement plate, et est munie d'un code QR, d'un code à barres, ou de tout autre motif pouvant être distingué visuellement.

4. Véhicule selon l'une quelconque des revendications 1 à 3, dans lequel toutes les étiquettes ID (16) d'une partie mobile (8) présentent la même identité unique, séparée des identités d'étiquettes ID d'autres parties mobiles, et dans lequel lesdites informations de type incluent les identités d'étiquettes ID et de parties mobiles associées.

5. Véhicule selon l'une quelconque des revendications 1 à 3, dans lequel chaque étiquette ID présente une identité unique, et dans lequel lesdites informations de type incluent les identités d'étiquettes ID et de parties mobiles associées.

6. Véhicule selon l'une quelconque des revendications 1 à 5, dans lequel ledit dispositif de détection d'objets (10) est un système de caméra comprenant deux caméras qui présentent essentiellement un champ de vues se chevauchant.

7. Véhicule selon l'une quelconque des revendications 1 à 5, dans lequel ledit dispositif de détection d'objets (10) est un dispositif de balayage par laser.

8. Véhicule selon l'une quelconque des revendications 1 à 5, dans lequel ledit dispositif de détection d'objets (10) est un dispositif de balayage 3D à lumière structurée.

9. Véhicule selon l'une quelconque des revendications 1 à 8, dans lequel le dispositif comprend en outre une unité d'affichage (20) et l'unité de traitement (14) est configurée pour présenter ladite représentation 3D sur ladite unité d'affichage, et dans lequel ladite représentation 3D présentée est une représentation virtuelle de l'élément mobile (6) constituée par l'application desdites informations de type qui incluent une illustration schématique dudit élément mobile.

10. Véhicule selon la revendication 9, dans lequel ladite unité d'affichage (20) est une paire de lunettes structurée pour présenter la représentation 3D de telle sorte que la représentation 3D est superposée sur les lunettes à travers lesquelles un utilisateur observe l'élément mobile.

11. Véhicule selon la revendication 9, dans lequel ladite unité d'affichage (20) est une paire de lunettes de réalité virtuelle.

12. Véhicule selon l'une quelconque des revendications 1 à 11, dans lequel l'élément mobile est une grue pliable, et les parties mobiles sont une ou plusieurs parmi une flèche et un outil.

13. Véhicule selon la revendication 1, dans lequel ladite unité de traitement (14) est en outre configurée pour déterminer une représentation tridimensionnelle des positions des parties mobiles de l'élément mobile à partir de ladite représentation 3D de l'élément mobile.

14. Véhicule selon l'une quelconque des revendications 1 à 13, dans lequel lesdites parties mobiles d'un élément mobile sont un ou plusieurs parmi des flèches, des extensions de flèche et des outils agencés à une extrémité de l'élément mobile.
